# EUROPEAN PATENT SPECIFICATION

(11) **EP 0 816 449 B1**
(45) Date of publication and mention of the grant of the patent: **10.12.2003**
(21) Application number: 97304735.0
(22) Date of filing: 30.06.1997
(51) Int. Cl.: C09D 11/00, C08G 18/28

(54) **Phase change ink formulation using urea and urethane isocyanante derived resins**
Phasenaustauschtintenzusammensetzung basierend auf von Isocyanat abgeleiteten Harnstoff- und Urethanharzen
Formulation d'encre à changement de phase en utilisant des résines d'urée et d'uréthane dérivées d'isocyanate

(30) Priority: 28.06.1996 US 671998; 28.06.1996 US 672609; 28.06.1996 US 672617; 28.06.1996 US 672815; 28.06.1996 US 672816; 28.06.1996 US 678386
(43) Date of publication of application: 07.01.1998
(73) Proprietor: XEROX CORPORATION, Stamford, CT 06904-1600 (US)
(72) Inventor: Bui, Loc V, Valencia, CA 91355 (US); King, Clifford R, Salem, Oregon 97301 (US); Banning, Jeffery H, Hillsboro, Oregon 97124 (US); Titterington, Donald R, Tualatin, Oregon 97062 (US)
(74) Representative: Grünecker, Kinkeldey, Stockmair & Schwanhäusser Anwaltssozietät

(56) References cited:
- WO-A-94/14902
- FR-A- 1 219 438
- GB-A- 2 294 939
- US-A- 5 507 864

## Description

The present invention relates to the use of resins made by reacting isocyanates with selected nucleophiles being alcohols and amines. The nucleophiles are used in combination to achieve certain desirable properties of the resins. The present invention also relates to phase change ink compositions containing such resins. More particularly, the present invention employs the use of a urethane isocyanate-derived resin, a urea isocyanate derived resin and a monoamide wax in a phase change ink carrier composition and the ink formed therefrom in printing applications. Still further, the present invention relates to the process of using such phase change ink compositions containing such resins and a mono-amide wax in a printing device.

In general, phase change inks (sometimes referred to as "hot melt inks") are in the solid phase at ambient temperature, but exist in the liquid phase at the elevated operating temperature of an ink jet printing device. At the jet operating temperature, droplets of liquid ink are ejected from the printing device and, when the ink droplets contact the surface of the printing media, they quickly solidify to form a predetermined pattern of solidified ink drops. Phase change inks have also been investigated for use in other printing technologies such as gravure printing as referenced in U.S. Patent No. 5,496,879 and German patent publications DE 4205636AL and DE 4205713AL assigned to Siegwerk Farbenfabrik Keller, Dr. Rung and Co.

Phase change inks for color printing generally comprise a phase change ink carrier composition which is combined with a phase change ink compatible colorant. Preferably, a colored phase change ink will be formed by combining the above-described ink carrier composition with compatible subtractive primary colorants. The subtractive primary colored phase change inks of this invention can comprise four component dyes, namely, cyan, magenta, yellow and black. U.S. Patent Nos. 4,889,506; 4,889,761; and 5,372,852 teach that the subtractive primary colorants employed typically may comprise dyes from the classes of Color Index (C.I.) Solvent Dyes, Disperse Dyes, modified Acid and Direct Dyes, and a limited number of Basic Dyes. The colorants can also include pigments as exemplified in U.S. Patent No. 5,221,335, assigned to Coates Electrographics LTD. U.S. Patent Application Serial No. 08/381,610, (corresponding to European Patent Application No 0 723 999), is directed to the use of a specific class of polymeric dyes in phase change ink compositions.

Phase change inks are desirable for ink jet printers since they remain in a solid phase at room temperature during shipping, long-term storage, and the like. Also, the problems associated with nozzle clogging due to ink evaporation are largely eliminated, thereby improving the reliability of ink jet printing. Furthermore, in the above-noted prior art phase change ink jet printers where the ink droplets are applied directly onto the printing medium the droplets solidify immediately upon contact with the substrate, migration of ink along the printing medium is prevented and dot quality is improved. This is also true of the processes and ink compositions described herein.

In addition to the above-referenced U.S. patents, many other patents describe materials for use in phase change ink jet inks. Some representative examples include U.S. Patent Nos. 3,653,932; 4,390,369; 4,484,948; 4,684,956; 4,851,045; 4,889,560; 5,006,170; and 5,151,120; as well as EP Application Nos. 0187352 and 0206286. These materials can include paraffins, microcrystalline waxes, polyethylene waxes, ester waxes, fatty acids and other waxy materials, fatty amide-containing materials, sulfonamide materials, resinous materials made from different natural sources (tall oil rosins and rosin esters are an example) and many synthetic resins, oligomers, polymers and copolymers.

Separately, PCT Patent Application WO 94/14902, which was published on July 7, 1994 and is assigned to Coates Brothers PLC, teaches a hot melt ink containing a colorant and, as a vehicle for the hot melt ink, an oligourethane having a melting point of at least 65°C and obtained by reacting an aliphatic or aromatic diisocyanate with at least a stoichiometric amount of either: (i) a monohydric alcohol component; or (ii) a monohydric alcohol component followed by another different monohydric alcohol component; or (iii) a monohydric alcohol component, followed by a dihydric alcohol component, followed by a monohydric alcohol component.

This PCT patent application defines the monohydric alcohol component as either a monohydric aliphatic alcohol (e.g. C₁ to C₂₂ alcohols), an etherified dihydric aliphatic alcohol (e.g. propylene glycol methyl ether (PGME), dipropylene glycol methyl ether (DPGME), ethylene glycol butyl ether (EGBE), diethylene glycol butyl ether (DPGBE), tripropylene glycol butyl ether (TPGBE) and propylene glycol phenyl ether (PPL)); esterified dihydric aliphatic alcohol (e.g. the esterifying acid may be an ethylenically unsaturated acid (such as acrylic acid or methacrylic acid), thereby introducing ethylenic unsaturation into the oligourethane and rendering it suitable for eventual further additional polymerization (curing) after having been applied to a substrate by hot melt printing), or dihydric polyalkylene glycol. This PCT Application further defined the dihydric alcohol component as a dihydric aliphatic alcohol or a dihydric polyalkylene glycol (e.g. ethylene glycol, polyethylene glycol (PEG 1500), polypropylene glycol (PPG 750, 1000 and 1500), trimethylene glycol, dipropylene glycol, methylpropanediol and 1,6-hexanediol).

Also, PCT Patent Application WO 94/04619, assigned to the General Electric Company, teaches the use of ionomeric materials in combination with image forming agents to form a hot melt ink jet ink. The ionomeric materials can include many different types of copolymeric or polymeric ionomers, including carboxyl-functional polyurethanes prepared from a diol or polyol and a hydroxyl acid. Many other carrier materials and colorants for the image forming agent of the invention are included in this PCT application.

There is still a need for new materials for novel and different applications of phase change inks. There is a also a need for relatively low viscosity resins, including non-polymeric resins, and waxes designed for phase change ink jet and other forms of phase change ink printing. These needs are solved by the present invention by providing a means to tailor the properties of these resin isocyanate-derived materials for specific applications.

The present invention provides a phase change ink carrier composition comprising in combination:
(a) a urethane isocyanate-derived resin derived from an isocyanate and at least one monohydric alcohol selected from octylphenol ethoxylate and hydroabietyl alcohol,
(b) a urea isocyanate-derived resin, and
(c) a mono-amide wax.

The present invention further provides a phase change ink composition comprising the above phase change ink carrier composition and a phase change compatible colorant.

The present invention is also directed to the use of the above phase change ink composition in a direct printing application or in an indirect printing application.

Preferred embodiments of the present invention are set forth in the sub-claims.

It is an advantage of the present invention that the isocyanate-derived resins are very pure, being free of salts and other insoluble contaminants.

It is another advantage of the present invention that the isocyanate-derived resins can be used in combination with other phase change ink carrier materials to obtain ink compositions that display improved yield stress versus temperature curves over prior art ink compositions.

It is yet another advantage of the present invention that the isocyanate-derived resins are transparent.

The term "nucleophile" in the present specification is used as defined on page 179 of "Advanced Organic Chemistry", 3rd Edition by Jerry March, ©1985 by John Wiley and Sons, to describe a reagent that brings an electron pair to a reaction to form a new bond. The nucleophiles used in this invention are specific alcohols and amines.

The term "oligomer" in the current specification is used as defined on page 7 of "Polymer Chemistry - The Basic Concepts" by Paul Hiemenz, ©1984 by Marcel Dekker, Inc., to describe a term coined to designate molecules for which n (representing the number of repeating monomer units) is less than 10.

The term "urethane isocyanate-derived resin" as used in the present specification and claims is defined as any resin that is a urethane that is the product of the reaction of an isocycanate and an alcohol as defined above.

The term "urea isocyanate-derived resin" as used in the present specification and claims is defined as any resin that is a urea that is the product of the reaction of an isocycanate and an amine.

Any suitable reaction condition for making urethane or urea compounds by condensing alcohols or amines with isocyanates may be employed in the practice of the present invention. Preferably, the reaction is carried out at elevated temperatures (e.g. 60°C to 160°C) in the presence of a urethane reaction catalyst such as dibutyltindilaurate, bismuth tris-neodecanoate, cobalt benzoate, lithium acetate, stannous octoate or triethylamine. The reaction conditions preferably are conducted in an inert atmosphere, such as argon or nitrogen gas or other suitable atmosphere, to prevent oxidizing or yellowing the reaction products and to prevent undesirable side reactions. The mole ratio of reactants is adjusted so that the isocyanate functionalities are completely consumed in the reaction with a slight molar excess of alcohol or amine typically remaining. Conceptually the reactants can be added together in any order and/or added to the reaction as physical mixtures. However, in the preferred embodiments of the invention, reaction conditions and the order of the addition of reactants are carefully controlled for several reasons. First, reaction conditions and reactant additions are chosen to provide a controlled exothermic reaction. Secondly, when reacting mixtures of alcohols or amines with diisocyanates such as isophorone diisocyanate (IPDI), the order of addition of the isocyanate and the different nucleophiles to the reaction is chosen to tailor the distribution of diurethane molecules, and/or diurea molecules in the final resin. When doing this, the different reactivities to isocyanates of alcohols versus amines are employed, as are the different reactivities of the two separate isocyanate groups on IPDI. See J.H. Saunders and K.C. Frisch's "Polyurethanes Part I, Chemistry" published by Interscience of New York, New York in 1962 and Olin Chemicals' Luxate® IM isophorone diisocyanate technical product information sheet which provide further explanation of this chemistry. This control of the reaction conditions and order of addition of the reactants is done to specifically tailor or customize the different types of molecular species in the finished resin so that the resin will:
(1) have a controlled viscosity that is designed for a specific application,
(2) have a controlled glass transition temperature and/or melting point, and
(3) have consistent properties from batch to batch.

The isocyanate-derived resins from these reactions are generally transparent solids having melting points in the range of 20°C to 150°C, viscosities in the range of 10 cPs to 5000 cPs at 150°C and T_{g}'s of -30°C to 100°C. The isocyanate-derived resins display properties such that the higher the T_{g} and the melting point, the higher is the viscosity. While the structural activity relationships are not fully understood, it is known that the T_{g} of the isocyanate-derived resins is controlled by the proper choice of the mixture of nucleophiles in the reaction as illustrated in Table 3 below. Varying one or more of the readily available commodity chemicals used as chemical precursors will permit custom-tailoring of the properties of the isocyanate-derived resin materials.

Preferred amines to react with difunctional and higher isocyanates to make the isocyanate-derived resins used in this invention include any monofunctional amine, with the exception of tertiary amines void of other nucleophilic functional groups (e.g., triethylamine). For instance, the monoamine could be any aliphatic primary or secondary amine (e.g., a C₁-C₂₂ or higher linear amine, any branched amine or any cyclic aliphatic amine) such as methyl amine, ethyl amine, (n- and iso-)propyl amine, (n-, iso-, and t-) butyl amine, (n-, iso-, t-) pentyl amine, (n-, iso-, t-) hexyl amine, (n-, iso-,t-) octyl amine, (n-, iso-, t-) nonyl amine, (n- and branched) decyl amine, (n- and branched) undecyl amines, (n- and branched) dodecyl amines, (n- and branched) hexadecyl amines, (n- and branched) dodecyl amines, dimethyl amine, diethyl amine, di(n- and iso-)propyl amines, di(n-, iso-, t-)butyl amine, di(n-, iso-, t-) pentyl amine, di(n-, iso-, t-) hexyl amine, di(n-, iso-, t-) cyclohexyl amine, di(n-, iso-, t-) heptyl amine, di(n-, iso-, t-) octyl amine, di(n-, iso-, t-) decyl amine, di(n-, iso-, t-) dodecyl amine, di(n-, iso-, t-) octadecyl amine, cyclohexyl amine, 2,3-dimethyl-1-cyclohexylamine, piperidine, pyrrolidine; an aliphatic/aromatic amine (e.g., benzyl amine or analogues with longer or additional alkyl chains); aromatic amines such as aniline, anisidine; fused ring amines such as rosin amine, dehydroabietyl amine, dihydroabietyl amine, hydroabietyl amine; and miscellaneous amines (e.g., adamantyl amine, isonipecotamide, polyoxyalkylenemonoamines, such as M-series Jeffamines available commercially from Huntsman Chemical Company of Austin, Texas; 3,3'-diamino-N-methyldipropylamine. It will be obvious to those skilled in the art that small amounts (on a molar basis) of polyamines could also be incorporated into the reaction mixture to produce oligomeric species in the resins if so desired. The preferred amine is octadecyl amine.

Preferred amines to react with monofunctional isocyanates to make the isocyanate-derivd resins used in this invention include any monofunctional amine, with the exception of tertiary amines void of other nucleophilic functional groups (e.g., triethylamine). For instance, the monoamine could be any aliphatic primary or secondary amine [e.g., a C₁-C₂₂ or higher linear amine, any branched amine or any cyclic aliphatic amine such as methyl amine, ethyl amine, (n- and iso-)propyl amine, (n-, iso-, and t-) butyl amine, (n-, iso-, t-) pentyl amine, (n-, iso-, t-) hexyl amine, (n-, iso-, t-) octyl amine, (n-, iso-, t-) nonyl amine, (n- and branched) decyl amine, (n-and branched) undecyl amine, (n- and branched) octadecyl amine, (n- and branched) hexadecyl amine, (n- and branched) dodecyl amine, dimethyl amine, diethyl amine, di(n-, and iso-)propyl amine, di(n-, iso-, t-)butyl amine, di(n-, iso-, t-) pentyl amine, di(n-, iso-, t-) hexyl amine, di(n-, iso-, t-) cyclohexyl amine, di(n-, iso-, t-) heptyl amine, di(n-, iso-, t-) octyl amine, di(n-, iso-, t-) decyl amine, di(n-, iso-, t-) octadecyl amine, di(n-, iso-, t-) dodecyl amine, cyclohexyl amine, 2,3-dimethyl-1-cyclohexylamine, piperidine, pyrrolidine], any aliphatic/aromatic amines (e.g., benzyl amine or analogues with longer or additional alkyl chains); aromatic amines such as aniline, anisidine; fused ring amines such as rosin amine, dehydroabietyl amine, dihydroabietyl amine, hydroabietyl amine; and miscellaneous amines (e.g., adamantyl amine, isonipecotamide, polyoxyalkylenemono-, di-, or triamines, such as M-, D-, and T-series Jeffamines available commercially from Huntsman Chemical Company of Austin, Texas; 3,3'-diamino-N-methyl-dipropylamine, as well as multifunctional amines such as polyethylene imine; ethylene diamine; hexamethylene diamine; isomers of cyclohexyldiamines; 1,3-pentadiamine; 1,12-dodecanediamine; 3-dimethylaminopropylamine; 4,7,10-trioxa-1,13-tridecanediamine; diethylene triamine; 3,3-diamino-N-methyldipropylamine; tris(2-aminoethyl)amine. The preferred amine is octadecylamine.

Additionally, hydroxyl/amino containing compounds can be employed (with di- and higher functionality isocyanates taking advantage of the difference in reactivity of the amine over the hydroxyl group, or with monoisocyanates reacting with the amine preferentially or with both the amine and the hydroxyl groups). Examples of this include ethanolamine and diethanolamine.

Additionally amides or other nucleophile containing compounds can be reacted with the isocyanates (mono, di). Some examples include: urea, oleamide, stearamide.

Preferred precursors to the isocyanate-derived resins used in the present invention include mono-, di- and other poly-isocyanates. Examples of monoisocyanates include octadecylisocyanate; octylisocyanate; butyl and t-butylisocyanate; cyclohexyl isocyanate; adamantyl isocyanate; ethylisocyanatoacetate; ethoxycarbonylisocyanate; phenylisocyanate; alphamethylbenzyl isocyanate; 2-phenylcyclopropyl isocyanate; benzylisocyanate; 2-ethylphenylisocyanate; benzoylisocyanate; meta and para-tolylisocyanate; 2-, 3-, or 4-nitrophenylisocyanates; 2-ethoxyphenyl isocyanate; 3-methoxyphenyl isocyanate; 4-methoxyphenylisocyanate; ethyl 4-isocyanatobenzoate; 2,6-dimethylphenylisocyante; 1-naphthylisocyanate; (naphthyl)ethylisocyantes. Examples of diisocyanates include isophorone diisocyanate (IPDI); toluene diisocyanate (TDI); diphenylmethane-4,4'-diisocyanate (MDI); hydrogenated diphenylmethane-4,4'-diisocyanate (H₁₂MDI); tetra-methyl xylene diisocyanate (TMXDI); hexamethylene-1,6-diisocyanate (HDI); hexamethylene-1,6-diisocyanate; napthylene-1,5-diisocyanate; 3,3'-dimethoxy-4,4'-biphenyldiisocyanate; 3,3'-dimethyl-4,4'-bimethyl-4,4'-biphenyldiisocyanate; phenylene diisocyanate; 4,4'-biphenyldiisocyanate; trimethylhexamethylene diisocyanate; tetramethylene xylene diisocyanate; 4,4'-methylenebis(2,6-diethylphenyl isocyanate); 1,12-diisocyanatododecane; 1,5-diisocyanato-2-methylpentane; 1,4-diisocyanatobutane; and cyclohexylene diisocyanate and its isomers; uretidione dimers of HDI. Examples of triisocyanates or their equivalents include the trimethylolpropane trimer of TDI, isocyanurate trimers of TDI, HDI, IPDI, and biuret trimers of TDI, HDI, IPDI. Examples of higher isocyanate functionalities include copolymers of TDI/HDI, as well as MDI oligomers.

Phase change inks of this invention contain a phase change carrier system or composition. The phase change carrier composition is generally designed for use in either a direct printing mode or use in an indirect or offset printing transfer system. In the direct printing mode, the phase change carrier composition is generally made up of one or more chemicals that provide the necessary properties to allow the phase change ink (1) to be applied in a thin film of uniform thickness on the final receiving substrate when cooled to the ambient temperature after printing directly to the substrate; (2) to be ductile while retaining sufficient flexibility so that the applied image on the substrate will not fracture upon bending; and (3) to possess a high degree of lightness, chroma, transparency and thermal stability. In an offset printing transfer or indirect printing mode, the phase change carrier composition is designed to possess not only the above mentioned properties, but certain fluidic and mechanical properties necessary for use in such a system, as described in U.S. Patent No. 5,389,958. The phase change inks of the current invention incorporate isocyanate-derived resins as part of the carrier composition and can be a supplemental ingredient or supplemental ingredients to the existing commercial phase change carrier composition. The isocyanate-derived materials used in the current invention are tailored to have the desirable properties mentioned above when used in the carrier composition of the inks of the present invention by varying one or more of the readily available commodity chemical precursors.

The phase change carrier compositions of the current invention may be used in combination with conventional phase change ink colorant materials such as Color Index (C.I.) Solvent Dyes, Disperse Dyes, modified Acid and Direct Dyes, Basic Dyes, Sulphur Dyes, Vat Dyes, and/or polymeric dyes such as those disclosed in U.S. Patent Application Serial No. 08/381,610, and/or pigments. They may also be used in combination with the isocyanate-derived colored resins of co-pending European patent application No. (not yet allotted), Our File APEP97524, filed concurrently herewith and in the name of the applicant of the present invention, to produce a phase change ink.

Prior art phase change inks for use in direct and indirect transfer printing systems are described in U.S. Patent Nos. 4,889,560 and 5,372,852. These inks consist of a phase change ink carrier composition comprising one or more fatty amide-containing materials, usually consisting of a mono-amide wax and a tetra-amide resin, one or more tackifiers, one or more plasticizers and one or more antioxidants, in combination with compatible colorants. A preferred tetra-amide resin is a dimer acid based tetra-amide that is the reaction product of dimer acid, ethylene diamine, and stearic acid. A preferred mono-amide is stearyl stearamide. A preferred tackifier resin is a glycerol ester of hydrogenated abietic (rosin) acid and a preferred antioxidant is that provided by Uniroyal Chemical Company under the tradename Naugard 524. The isocyanate-derived resins used in the present invention replace one or more of the ingredients in the above phase change ink carrier composition or the inks of the present invention can have all of the above ingredients replaced by the isocyanate-derived resins used in the present invention. The advantages of inks formulated with isocyanate-derived resins over the prior art phase change inks are:
(1) The isocyanate-derived resins used in this invention are very pure, being free of salts and other insoluble contaminants. This makes the inks made from these materials easy to filter and provides for high reliability in ink jet printing devices. This is a major advantage.
(2) The isocyanate-derived resins used in this invention are specifically tailored to give certain physical properties that optimize the performance of the inks of this invention in ink jet printing devices and on the output substrate. These desirable ink properties include melting point, viscosity, transparency and the dynamic mechanical properties referenced in the aforementioned U.S. Patent No. 5,389,958.
(3) The isocyanate-derived resins used in this invention can be used in certain combinations with other phase change ink carrier materials to give ink compositions that display an improved yield stress versus temperature curve over prior art ink compositions. This enables ink droplets to be spread and fused at elevated temperatures during the fusing and transfer steps in an indirect printing process, but at a lower pressure than was possible with prior art inks.

Many other patents describe other materials for use in phase change ink jet inks. Some representative examples include U.S. Patent Nos. 3,653,932; 4,390,369; 4,484,948; 4,684,956; 4,851,045; 5,006,170; 5,151,120; EP Publications Nos. 0187352 and 0206286; and PCT Publication No WO 94/04619. These other materials can include paraffins, microcrystalline waxes, polyethylene waxes, ester waxes, amide waxes, fatty acids, fatty alcohols, fatty amides and other waxy materials, sulfonamide materials, resinous materials made from different natural sources (tall oil rosins and rosin esters are an example) and many synthetic resins, oligomers, polymers, co-polymers, and ionomers. It will be obvious to those skilled in the art that the isocyanate-derived materials used in this invention could be used in inks made from many different combinations of these materials.

The aforementioned U.S. Patent No. 5,496,879 and German patent publications DE 4205636AL and DE 4205713AL, assigned to Siegwerk Farbenfabrik Keller, Dr. Rung and Co., describe materials used for phase change or hot melt gravure printing. It will be obvious to those skilled in the art that the isocyanate-derived materials used in this current invention would be compatible with those materials and could also be used in that application or other similar printing methods that employ hot melt ink technology.

It also will be obvious to those skilled in the art that other ink colors besides the subtractive primary colors are desirable for applications, such as postal marking or industrial marking and labeling using phase change printing, and that this invention is applicable to these needs. Infrared (IR) or ultraviolet (UV) absorbing dyes can also be incorporated into the inks of this invention for use in applications such as "invisible" coding or marking of products.

The inks of the present invention can be equally well employed in apparatus for direct or indirect (offset) printing applications. When employed in direct printing applications a suitable method of printing or producing a layer of a phase change colored ink directly on the surface of a substrate can comprise:
(1) forming a phase change ink composition in the solid phase, comprising an admixture of (a) a phase change carrier composition containing at least one isocyanate-derived resin and (b) a phase change compatible colorant.
(2) transferring the solid phase, phase change colored ink composition to a phase change ink application means or print head;
(3) raising the operating temperature of the application means or print head to a level whereby a liquid phase, phase change colored ink composition is formed;
(4) providing a substrate in proximity to the application means;
(5) applying a predetermined pattern of the liquid phase, phase change colored ink composition to at least one surface of the substrate; and
(6) lowering the temperature of the applied ink composition to form a solid phase, phase change ink pattern on the substrate.
An appropriate direct printing process is described in greater detail in U.S. Patent No. 5,195,430.

When employed in indirect or offset printing applications a suitable method of printing or producing a layer of a phase change colored ink indirectly on the surface of a substrate by transferring from an intermediate transfer surface can comprise:
(1) forming a phase change ink composition in the solid phase, comprising an admixture of (a) a phase change carrier composition containing at least one isocyanate-derived resin and (b) a phase change compatible colorant.
(2) transferring the solid phase, phase change colored ink composition to a phase change ink application means or a print head;
(3) raising the operating temperature of the application means or print head to a level whereby a liquid phase, phase change colored ink composition is formed;
(4) providing an intermediate transfer surface in proximity to the application means;
(5) applying a predetermined pattern of the liquid phase, phase change colored ink composition to the intermediate transfer surface;
(6) lowering the temperature of the applied ink composition to form a solid phase, phase change ink pattern on the intermediate transfer surface at a second, intermediate temperature;
(7) transferring said phase change ink composition from the intermediate transfer surface to a final substrate; and
(8) fixing the phase change ink composition to the substrate to form a printed substrate, the phase change ink composition having (a) a compressive yield strength which will allow it to be malleable to spread and deform without an increase in stress when compressive forces are applied thereto at the second operating temperature, and sufficient internal cohesive strength to avoid shear banding and weak behavior when said phase change ink composition is transferred and fixed to said substrate, and (b) a ductility on the substrate after fixing.

An appropriate offset or indirect printing process is described in greater detail in U.S. Patent No. 5,389,958.

The present invention is further described in detail by means of the following Examples. All parts and percentages are by weight and all temperatures are degrees Celsius unless explicitly stated otherwise. It is to be noted that while the following examples may recite only one colorant, it is to be understood that each individual example is only illustrative and any of the primary colorants (cyan, yellow, magenta and black) used in subtractive color printing could be employed in each instance.

Examples 1 and 5 show the preparation of the urethane isocyanate-derived resin used according to the present invention. Examples 8 and 9 show the preparation of the urea isocyanate-derived resin used according to the present invention. Example 14 shows the preparation of a phase change ink according to the present invention. The remaining examples are reference examples.

### EXAMPLE 1

### The Reaction Product of Hydroabietyl Alcohol and Isophorone Diisocyanate

About 391.9 grams (1.351 moles) of Abitol E hydroabietyl alcohol¹ was added to a 1000ml four-neck resin kettle equipped with a Trubore stirrer, an N₂ atmosphere inlet, 200 ml addition funnel, and a thermocouple-temperature controller. The kettle was heated to about 100°C with stirring under an N₂ atmosphere and about 150.0 grams (0.676 moles) of isophorone diisocyanate² was added to the addition funnel. About 0.50 grams of dibutyltindilaurate³ catalyst was added to the Abitol E, followed by dropwise addition of the isophorone diisocyanate over 3 hours. The temperature was gradually increased to about 155°C during this 3 hour period. After an additional 2 hours at about 155°C, a Fourier Transform Infrared Spectroscopy (FT-IR) of the product was run to insure all of the isocyanate (NCO) was consumed. The absence (disappearance) of a peak at about 2285 cm⁻¹ (NCO) and the appearance (or increase in magnitude) of peaks at about 1740-1680 cm⁻¹ and about 1540-1530 cm⁻¹ corresponding to urethane frequencies were used to confirm this. The final di-urethane resin product was poured into aluminum molds and allowed to cool and harden. This final product was a clear solid resin at room temperature characterized by the following physical properties: viscosity of about 4,072.9 cPs as measured by a Ferranti-Shirley cone-plate viscometer at about 140°C, a melting point of from about 72.0°C to about 76.0°C as measured by an electrothermal capillary melting point apparatus, and a T_{g} of about 48°C as measured by differential scanning calorimetry using a DuPont 2100 calorimeter at a scan rate of 20°C/minute.
1Abitol E - Hydroabietyl alcohol available from Hercules Inc. of Wilmington, Delaware.
2Desmodur I - Isophorone Diisocyanate available from Bayer Corp. of Pittsburg, Pennsylvania.
3Dibutyltindilaurate available from Aldrich Chemicals of Milwaukee, Wisconsin.

### EXAMPLE 2

### The Reaction Product of 1,5 Parts Hydroabietyl Alcohol, 0.5 Parts Octadecyl Amine, and Isophorone Diisocyanate

About 240.2 grams (0.676 moles) of hydroabietyl alcohol¹ was added to a 1000ml four-neck resin kettle equipped with a Trubore stirrer, an N₂ atmosphere inlet, 200 ml addition funnel, and a thermocouple-temperature.controller. About 100.0 grams (0.45 moles) of isophorone diisocyanate² was added to the addition funnel. Agitation of the hydroabietyl alcohol first was begun and then all of the isophorone diisocyanate was added over approximately 5 minutes. About 0.22 grams of dibutyltindilaurate³ catalyst was added and the reaction mixture heated to about 125°C under an N₂ atmosphere. After 4 hours at 125°C, about 59.95 grams (0.225 moles) of octadecyl amine⁴ was added and the temperature raised to about 150°G and held for approximately 2 hours. An FT-IR of the reaction product was run to insure all of the NCO functionality was consumed. The absence (disappearance) of a peak at about 2285 cm⁻¹ (NCO) and the appearance (or increase in magnitude) of peaks at about 1705-1635 cm⁻¹ and about 1515-1555 cm⁻¹ corresponding to urea frequencies and about 1740-1680 cm⁻¹ and about 1540-1530 cm⁻¹ corresponding to urethane frequencies were used to confirm this. The final mixed urethane/urea resin product was poured into aluminum molds and allowed to cool and harden. This final product was a clear solid resin at room temperature characterized by the following physical properties: viscosity of about 314.8 cPs as measured by a Ferranti-Shirley cone-plate viscometer at about 140°C, a melting point of from about 67.9°C to about 87.0°C as measured by an electrothermal capillary melting point apparatus, and a T_{g} of about 23°C as measured by differential scanning calorimetry using a DuPont 2100 calorimeter at a scan rate of 20°C/minute.
1Abitol E - Hydroabietyl alcohol available from Hercules Inc. of Wilmington, Delaware.
2Desmodur I - Isophorone diisocyanate available from Bayer Corp. of Pittsburg, Pennsylvania.
3Dibutyltindilaurate available from Aldrich Chemicals of Milwaukee, Wisconsin.
4Octadecyl amine (technical grade) available from ACROS Organics of New Jersey.

### EXAMPLE 3

### The Reaction Product of 1.25 Parts Hydroabietyl Alcohol.0.75 Parts Octadecyl Amine and Isophorone Diisocyanate

About 150.1 grams (0.422 moles) of hydroabietyl alcohol¹ and about 75.0 grams (0.338 moles) of isophorone diisocyanate² were added to a 500ml three-neck resin kettle equipped with a Trubore stirrer, an N₂ atmosphere inlet, and a thermocouple-temperature controller. Agitation was begun and then about 0.22 grams of dibutyltindilaurate³ catalyst was added and the reaction mixture heated to about 130°C under an N₂ atmosphere. After 4 hours at about 130°C, about 67.45 grams (0.253 moles) of octadecyl amine⁴ was added and the temperature raised to about 150°C and held for approximately 2 hours. An FT-IR of the reaction product was run to insure all of the NCO functionality consumed. The absence (disappearance) of a peak at about 2285 cm⁻¹ (NCO) and the appearance (or increase in magnitude) of peaks at about 1705-1635 cm⁻¹ and about 1515-1555 cm⁻¹ corresponding to urea frequencies and about 1740-1680 cm⁻¹ and about 1540-1530 cm⁻¹ corresponding to urethane frequencies were used to confirm this. The final mixed urethane/urea resin product was then poured into aluminum molds and allowed to cool and harden. This final product was a clear solid resin at room temperature characterized by the following physical properties: viscosity of about 275.0 cPs as measured by a Ferranti-Shirley cone-plate viscometer at about 140°C, a melting point of from about 68.4°C to about 89.0°C as measured by an electrothermal capillary melting point apparatus, and a T_{g} of about 17°C as measured by differential scanning calorimetry using a DuPont 2100 calorimeter at a scan rate of 20°C/minute.
1Abitol E - Hydroabietyl alcohol available from Hercules Inc. of Wilmington, Delaware.
2Desmodur I - Isophorone diisocyanate available from Bayer Corp. of Pittsburg, Pennsylvania.
3Dibutyltindilaurate available from Aldrich Chemicals of Milwaukee, Wisconsin..
4 Octadecyl amine (technical grade) available from ACROS Organics of New Jersey.

### EXAMPLE 4

### The Reaction Product of 1 Part Hydroabietyl Alcohol, 1 Part Octadecyl Amine and Isophorone Diisocyanate

About 120.1 grams (0.338 moles) of hydroabietyl alcohol¹ and about 75.0 grams (0.338 moles) of isophorone diisocyanate² was added to a 500ml three-neck resin kettle equipped with a Trubore stirrer, an N2 atmosphere inlet, and a thermocouple-temperature controller. Agitation was begun and then about 0.22 grams of dibutyltindilaurate³ catalyst was added and the reaction mixture heated to about 90°C under an N₂ atmosphere. After 1 hour at about 90°C the temperature was increased to about 110°C and held for 2 hours. About 89.93 grams (0.338 moles) of octadecyl amine⁴ was added and the temperature raised to about 130°C and held for approximately 2 hours. An FT-IR of the reaction product was run to insure all of the NCO functionality was consumed. The absence (disappearance) of a peak at about 2285 cm⁻¹ (NCO) and the appearance (or increase in magnitude) of peaks at about 1705-1635 cm⁻¹ and about 1515-1555 cm⁻¹ corresponding to urea frequencies and about 1740-1680 cm⁻¹ and about 1540-1530 cm⁻¹ corresponding to urethane frequencies were used to confirm this. The final mixed urethane/urea resin product was poured into aluminum molds and allowed to cool and harden. This final product was a clear solid resin at room temperature characterized by the following physical properties: viscosity of about 15.7 cPs as measured by a Ferranti-Shirley cone-plate viscometer at about 140°C, a melting point of from about 73.2°C to about 110°C as measured by an electrothermal capillary melting point apparatus, and a T_{g} of about 16°C as measured by differential scanning calorimetry using a DuPont 2100 calorimeter at a scan rate of 20°C/minute.
1Abitol E - Hydroabietyl alcohol available from Hercules Inc. of Wilmington, Delaware.
2Desmodur I - Isophorone düsocyanate available from Bayer Corp. of Pittsburg, Pennsylvania.
3Dibutyltindilaurate available from Aldrich Chemicals of Milwaukee, Wisconsin.
4Octadecyl amine (technical grade) available from ACROS Organics of New Jersey.

### EXAMPLES 5

### The Reaction Product of Octylphenol Ethoxylate and Isophorone Diisocyanate

About 450.4 grams (1.802 moles) of Triton X15 octylphenol ethoxylate¹ and about 200.0 grams (0.901 moles) of isophorone diisocyanate² was added to a 1000ml three-neck resin kettle equipped with a Trubore stirrer, an N₂ atmosphere inlet, and a thermocouple-temperature controller. The mixture was agitated for 10 minutes and then about 0.33 grams of dibutyltindilaurate³ catalyst was added and the reaction mixture heated to about 150°C under an N₂ atmosphere. After 5.5 hours at about 150°C an FT-IR of the product was run to insure all of the NCO was consumed. The absence (disappearance) of a peak at about 2285 cm⁻¹ (NCO) and the appearance (or increase in magnitude) of peaks at about 1740-1680 cm⁻¹ and about 1540-1530 cm⁻¹ corresponding to urethane frequencies were used to confirm this. The final di-urethane resin product was poured into aluminum molds and allowed to cool and harden. This final product was a clear solid resin at room temperature characterized by the following physical properties: viscosity of about 124.7 cPs as measured by a Ferranti-Shirley cone-plate viscometer at about 140°C, a melting point of from about 51.3°C to about 81.9°C as measured by an electrothermal capillary melting point apparatus, and a T_{g} of about 36°C as measured by differential scanning calorimetry using a DuPont 2100 calorimeter at a scan rate of 20°C/minute.
1Triton X15 octylphenol ethoxylate is available from Union Carbide Chemicals and Plastics Company Inc. of Danbury, Connecticut. Note: IGEPAL CA-210 octylphenol ethoxylate, available from Rhone-Poulenc Co., Cranbury, NJ, can be directly substituted for Triton X15 in this reaction.
2VESTANAT IPDI- Isophorone diisocyanate available from Huls America, Inc. of Piscataway, New Jersey.
3Dibutyltindilaurate available from Aldrich Chemicals of Milwaukee, Wisconsin.

### EXAMPLE 6

### The Reaction Product of Octadecyl Alcohol, Octadecyl Amine and Isophorone Diisocyanate

About 243.2 grams (0.901 moles) of octadecyl alcohol¹ and about 200.0 grams (0.901 moles) of isophorone diisocyanate² were added to a 1000ml three-neck resin kettle equipped with a Trubore stirrer, an N₂ atmosphere inlet, and a thermocouple-temperature controller. Agitation was begun and then about 0.33 grams of dibutyltindilaurate³ catalyst was added and the reaction mixture heated to about 90°C under an N₂ atmosphere. After 4 hours the temperature was raised to about 120°C and about 239.8 grams (0.901 moles) of octadecyl amine⁴ was added over 15 minutes. The temperature was raised to about 150°C and held for approximately 4 hours. An FT-IR of the product was run to insure all of the NCO functionality was consumed. The absence (disappearance) of a peak at about 2285 cm⁻¹ (NCO) and the appearance (or increase in magnitude) of peaks at about 1705-1635 cm⁻¹ and about 1515-1555 cm⁻¹ corresponding to urea frequencies and about 1740-1680 cm⁻¹ and about 1540-1530 cm⁻¹ corresponding to urethane frequencies were used to confirm this. The final mixed urethane/urea resin product was poured into aluminum molds and allowed to cool and harden. This final product was a clear solid resin at room temperature characterized by the following physical properties: viscosity of about 39.9 cPs as measured by a Ferranti-Shirley cone-plate viscometer at about 140°C, a melting point of from about 63.2°C to about 92.0°C as measured by an electrothermal capillary melting point apparatus, and a T_{g} of about -29°C as measured by differential scanning calorimetry using a DuPont 2100 calorimeter at a scan rate of 20°C/minute.
1Octadecyl alcohol available from Aldrich Chemicals of Milwaukee, Wisconsin.
2Desmodur I - Isophorone diisocyanate available from Bayer Corp. of Pittsburg, Pennsylvania.
3Dibutyltindilaurate available from Aldrich Chemicals of Milwaukee, Wisconsin.
4Octadecyl amine (technical grade) available from ACROS Organics of New Jersey.

### EXAMPLE 7

### The Reaction Product of Octadecyl Alcohol and Isophorone Diisocyanate

About 103.14 grams (0.382 moles, 0.382 equiv.) of octadecyl alcohol¹ was added to a 500ml four-neck resin kettle equipped with a Trubore stirrer, an N₂ atmosphere inlet, a 200 ml addition funnel, and a thermocouple-temperature controller. The kettle was heated to about 80°C with stirring under an N₂ atmosphere and about 42.4 grams (0.191 moles, 0.382 equiv.) of isophorone diisocyanate² was added to the addition funnel. Isophorone diisocyanate was then added dropwise over 1 hour at about 80°C. The temperature was increased to about 120°C and held for 3 hours. An FT-IR of the product was run to insure all of the NCO functionality was consumed. The absence (disappearance) of a peak at 2285 cm⁻¹ (NCO) and the appearance (or increase in magnitude) of peaks at 1740-1680 cm⁻¹ and 1540-1530 cm⁻¹ corresponding to urethane frequencies were used to confirm this. The final di-urethane resin product was poured into aluminum molds and allowed to cool and harden. This final product was a clear solid resin at room temperature characterized by the following physical properties: viscosity of about 10.8 cPs as measured by a Ferranti-Shirley cone-plate viscometer at about 140°C, and a melting point of about 51.2°C as measured by an electrothermal capillary melting point apparatus. An attempt was made to measure the T_{g} using differential scanning calorimetry with a DuPont 2100 calorimeter at a scan rate of 20°C/minute, but the T_{g} was determined not to be measurable.
¹Octadecyl alcohol available from Aldrich Chemicals of Milwaukee, Wisconsin.
²Desmodur I - Isophorone diisocyanate available from Bayer Corp. of Pittsburg, Pennsylvania.

### EXAMPLE 8

### The Reaction Product of Octadecyl Amine and Isophorone Diisocyanate

About 359.7 grams (1.351 moles) of octadecyl amine¹ was added to a 1000ml four-neck resin kettle equipped with a Trubore stirrer, an N₂ atmosphere inlet, addition funnel (200 ml), and thermocouple-temperature controller. The kettle was heated to about 70°C with stirring under an N₂ atmosphere and about 150 grams (0.676 moles) of isophorone diisocyanate² was added to the addition funnel. Isophorone diisocyanate was then added dropwise to the octadecyl amine over 2 hours with the temperature gradually increased to about 165°C as the viscosity increased. The contents were held at about 165°C for 1 hour and an FT-IR of the product was run to insure all of the NCO functionality was consumed. The absence (disappearance) of a peak at about 2285 cm⁻¹ (NCO) and the appearance (or increase in magnitude) of peaks at about 1705-1635 cm⁻¹ and about 1515-1555 cm⁻¹ corresponding to urea frequencies were used to confirm this. The final di-urea resin product was poured into aluminum molds and allowed to cool and harden. This final product was a clear solid resin at room temperature characterized by the following physical properties: viscosity of about 988.0 cPs as measured by a Ferranti-Shirley cone-plate viscometer at about 140°C, a melting point of from about 84.4°C to about 93.9°C as measured by an electrothermal capillary melting point apparatus, and a T_{g} of about -14°C as measured by differential scanning calorimetry using a DuPont 2100 calorimeter at a scan rate of 20°C/minute.
1Octadecyl amine (technical grade) available from ACROS Organics of New Jersey.
2Desmodur I - Isophorone diisocyanate available from Bayer Corp. of Pittsburg, Pennsylvania.

### EXAMPLE 9

### The Reaction Product of Octadecyl Amine and Octadecylisocyanate

About 250.0 grams (0.877 moles) of octadecylisocyanate¹ and about 233.3 grams (0.877 moles) of octadecylamine² were added to a 1000ml three-neck resin kettle equipped with a Trubore stirrer, an N₂ atmosphere inlet, and thermocouple-temperature controller. The kettle was heated to about 130°C with stirring under an N₂ atmosphere and held for 6 hours. An FT-IR of the product was run to insure all of the NCO functionality was consumed. The absence (disappearance) of a peak at about 2285 cm⁻¹ (NCO) and the appearance (or increase in magnitude) of peaks at about 1705-1635 cm⁻¹ and about 1515-1555 cm⁻¹ corresponding to urea frequencies were used to confirm this. The final mono-urea wax product was poured into aluminum molds and allowed to cool and harden. This final product was a white waxy solid at room temperature characterized by the following physical properties: viscosity of about 13.2 cPs as measured by a Ferranti-Shirley cone-plate viscometer at about 140°C, and a melting point of from about 113.4°C to about 113.6°C as measured by an electrothermal capillary melting point apparatus.
¹Mondur O - Octadecylisocyanace available from Bayer Corp. of Pittsburg, Pennsylvania.
²Octadecyl amine (technical grade) available from ACROS Organics of New Jersey.

### EXAMPLE 10

### The Reaction Product of Octadecyl Alcohol and Octadecylisocyanate

About 250.0 grams (0.877 moles) of octadecylisocyanate¹ and about 236.7 grams (0.867 moles) of octadecyl alcohol² was added to a 1000ml three-neck resin kettle equipped with a Trubore stirrer, an N₂ atmosphere inlet, and a thermocouple-temperature controller. The kettle was heated to about 120°C with stirring under an N₂ atmosphere and about 0.5 grams of dibutyltindilaurate³ catalyst was added. The reaction mixture was heated at about 120°C for approximately 4 hours, then increased to about 140°C and held for 2 hours. An FT-IR of the product was run to insure all of the NCO functionality was consumed. The absence (disappearance) of a peak at about 2285 cm⁻¹ (NCO) and the appearance (or increase in magnitude) of peaks at about 1740-1680 cm⁻¹ and about 1540-1530 cm⁻¹ corresponding to urethane frequencies were used to confirm this. The final mono-urethane wax product was poured into aluminum molds and allowed to cool and harden. This final product was a white waxy solid at room temperature characterized by the following physical properties: viscosity of about 3.7 cPs as measured by a Ferranti-Shirley cone-plate viscometer at about 140°C, and a melting point of from about 84.5°C to about 87.7°C as measured by an electrothermal capillary melting point apparatus.
¹Mondur O - Octadecylisocyanate available from Bayer Corp. of Pittsburg, Pennsylvania.
²Alfol 18 Alcohol (octadecyl alcohol) available from Vista Chemical Company of Houston, Texas.
³Dibutyltindilaurate available from Aldrich Chemicals of Milwaukee, Wisconsin.

### EXAMPLE 11

### Cyan Ink Made From Mono-Amide Wax, Urethane Resin and Tackifier Resin

About 62.5 grams of the di-urethane resin reaction product from Example 5, about 62.5 grams of a rosin ester tackifier resin available commercially as Arakawa KE-100¹, about 125 grams of stearyl stearamide available commercially as Witco S-180² and about 0.4 grams of Uniroyal Naugard 445 antioxidant³ were combined in a stainless steel beaker. The materials were melted together at a temperature of about 140°C in an oven, then blended by stirring in a temperature controlled mantle at about 115°C for about 1/2 hour. To this mixture was added about 5 grams of Solvent Blue 44. After stirring for about 1/2 hour, the cyan ink was filtered through a heated Mott apparatus (available from Mott Metallurgical) using #3 Whatman filter paper and a pressure of 15 psi. The filtered phase change ink was poured into molds and allowed to solidify to form ink sticks. This final ink product was characterized by the following physical properties: viscosity of about 12.4 cPs as measured by a Ferranti-Shirley cone-plate viscometer at about 140°C, a melting point of about 90°C as measured by differential scanning calorimetry using a DuPont 2100 calorimeter, and a T_{g} of about 42°C as measured by Dynamic Mechanical Analysis using a Rheometrics Solids Analyzer (RSAII). The spectral strength of the ink was determined using a spectrophotographic procedure based on the measurement of the colorant in solution by dissolving the solid ink in butanol and measuring the absorbance using a Perkin Elmer Lambda 2S UV/VIS spectrophotometer. The spectral strength of the ink was measured as about 2705 milliliters · Absorbance Units per gram at λₘₐₓ.
¹KE-100 - Glycerol ester of hydrogenated abietic (rosin) acid available from Arakawa Chemical Industries, Ltd. of Osaka, Japan.
²Kemamide S-180 - Stearyl stearamide available from Witco Chemical Company of Memphis, Tennessee.
³Naugard 445 - antioxidant available from Uniroyal Chemical Company of Oxford, Connecticut.

### EXAMPLE 12

### Cyan Ink Made From Amide Wax, Mixed Urethane/Urea Resin and Tackifier Resin

In a stainless steel beaker were combined about 62.5 grams of the reaction product mixture of urethane/urea resin material from Example 6, about 65 grams of a rosin ester tackifier resin available commercially as Arakawa KE-100¹, about 120 grams of Witco S-180² stearyl stearamide and 0.4 grams of Uniroyal Naugard 445 antioxidant³. The materials were melted together at a temperature of about 140°C in an oven, then blended by stirring in a temperature controlled mantle at about 115°C for about 1/2 hour. To this mixture was added about 5 grams of Solvent Blue 44. After stirring for about 1/2 hour, the cyan ink was filtered through a heated Mott apparatus (available from Mott Metallurgical) using #3 Whatman filter paper and a pressure of about 15 psi. The filtered phase change ink was poured into molds and allowed to solidity to form ink sticks. This final ink product was characterized by the following physical properties: viscosity of about 12.9 cPs as measured by a Ferranti-Shirley cone-plate viscometer at about 140°C, a melting point of about 88°C as measured by differential scanning calorimetry using a DuPont 2100 calorimeter, and a T_{g} of about 41°C as measured by Dynamic Mechanical Analysis using a Rheometrics Solids Analyzer (RSAII). The spectral strength of the ink was determined using a spectrophotographic procedure based on the measurement of the colorant in solution by dissolving the solid ink in butanol and measuring the absorbance using a Perkin Elmer Lambda 2S UV/VIS spectrophotometer. The spectral strength of the ink was measured as about 2698 milliliters · Absorbance Units per gram at λₘₐₓ.
¹KE-100 - Glycerol ester of hydrogenated abietic (rosin) acid available from Arakawa Chemical Industries, Ltd. of Osaka, Japan.
²Kemamide S-180 - Stearyl stearamide available from Witco Chemical Company of Memphis, Tennessee.
³Naugard 445 - antioxidant available from Uniroyal Chemical Company of Oxford, Connecticut.

### EXAMPLE 13

### Cyan Ink Made From Amide Wax, Urethane Resin and Tackifier Resin

In a stainless steel beaker were combined about 57.5 grams of the diurethane resin reaction product from Example 1, about 57.5 grams of a rosin ester tackifier resin available commercially as Arakawa KE-100¹, about 135 grams of Witco S-180 stearyl stearamide² and about 0.5 grams of Uniroyal Naugard 445 antioxidant³. The materials were melted together at a temperature of about 140°C in an oven, then blended by stirring in a temperature controlled mantle at about 115°C for about 1/2 hour. To this mixture was added about 5 grams of Solvent Blue 44. After stirring for about 1/2 hour, the cyan ink was filtered through a heated Mott apparatus (available from Mott Metallurgical) using #3 Whatman filter paper and a pressure of about 15 psi. The filtered phase change ink was poured into molds and allowed to solidify to form ink sticks. This final ink product was characterized by the following physical properties: viscosity of about 13.2 cPs as measured by a Ferranti-Shirley cone-plate viscometer at about 140°C, a melting point of about 90°C as measured by differential scanning calorimetry using a DuPont 2100 calorimeter, and a T_{g} of about 49°C as measured by Dynamic Mechanical Analysis using a Rheometrics Solids Analyzer (RSAII). The spectral strength of the ink was determined using a spectrophotographic procedure based on the measurement of the colorant in solution by dissolving the solid ink in butanol and measuring the absorbance using a Perkin Elmer Lambda 2S UV/VIS spectrophotometer. The spectral strength of the ink was measured as about 2721 milliliters · Absorbance Units per gram at λₘₐₓ.
¹KE-100 - Glycerol ester of hydrogenated abietic (rosin) acid available from Arakawa Chemical Industries, Ltd. of Osaka, Japan.
²Kemamide S-180 - Stearyl stearamide available from Witco Chemical Company of Memphis, Tennessee.
³Naugard 445 - antioxidant available from Uniroyal Chemical Company of Oxford, Connecticut.

### EXAMPLE 14

### Cyan Ink Made From Amide Wax, Urethane Resin and Urea Resin

About 56.25 grams of the di-urethane resin reaction product from Example 5, about 56.25 grams of the di-urea resin reaction product from Example 8, about 137.5 grams of Witco S-180 stearyl stearamide¹ and about 0.5 grams of Uniroyal Naugard 445 antioxidant² were combined in a stainless steel beaker. The materials were melted together at a temperature of about 140°C in an oven, then blended by stirring in a temperature controlled mantle at about 115°C for about 1/2 hour. To this mixture was added about 5 grams of Solvent Blue 44. After stirring for about 1/2 hr., the cyan ink was filtered through a heated Mott apparatus (available from Mott Metallurgical) using #3 Whatman filter paper and a pressure of about 15 psi. The filtered phase change ink was poured into molds and allowed to solidify to form ink sticks. This final ink product was characterized by the following physical properties: viscosity of about 14.1 cPs as measured by a Ferranti-Shirley cone-plate viscometer at about 140°C, a melting point of about 90°C as measured by differential scanning calorimetry using a DuPont 2100 calorimeter, and a T_{g} of about 30°C as measured by Dynamic Mechanical Analysis using a Rheometrics Solids Analyzer (RSAII). The spectral strength of the ink was determined using a spectrophotographic procedure based on the measurement of the colorant in solution by dissolving the solid ink in butanol and measuring the absorbance using a Perkin Elmer Lambda 2S UV/VIS spectrophotometer. The spectral strength of the ink was measured as about 2690 milliliters · Absorbance Units per gram at λₘₐₓ.
¹Kemamide S-180 - Stearyl stearamide available from Witco Chemical Company of Memphis, Tennessee.
²Naugard 445 - antioxidant available from Uniroyal Chemical Company of Oxford, Connecticut.

### EXAMPLE 15

### Cyan Ink Made From Amide Wax, Urethane Resin and Mixed Urethane/Urea Resin

About 70 grams of the reaction product urethane material from Example 5, about 70 grams of the reaction product urethane/urea mixture material from Example 6, about 110 grams of Witco S-180 stearyl stearamide¹ and about 0.5 grams of Uniroyal Naugard 445 antioxidant² were combined in a stainless steel beaker. The materials were melted together at a temperature of about 140°C in an oven, then blended by stirring in a temperature controlled mantle at about 115°C for about 1/2 hour. To this mixture was added about 5 grams of Solvent Blue 44. After stirring for about 1/2 hour, the cyan ink was filtered through a heated Mott apparatus (available from Mott Metallurgical) using #3 Whatman filter paper and a pressure of about 15 psi. The filtered phase change ink was poured into molds and allowed to solidify to form ink sticks. This final ink product was characterized by the following physical properties: viscosity of about 12.9 cPs as measured by a Ferranti-Shirley cone-plate viscometer at about 140°C, a melting point of about 88°C as measured by differential scanning calorimetry using a DuPont 2100 calorimeter, and a T_{g} of about 24°C as measured by Dynamic Mechanical Analysis using a Rheometrics Solids Analyzer (RSAII). The spectral strength of the ink was determined using a spectrophotographic procedure based on the measurement of the colorant in solution by dissolving the solid ink in butanol and measuring the absorbance using a Perkin Elmer Lambda 2S UV/VIS spectrophotometer. The spectral strength of the ink was measured as about 2714 milliliters · Absorbance Units per gram at λₘₐₓ.
¹Kemamide S-180 - Stearyl stearamide available from Witco Chemical Company of Memphis, Tennessee.
²Naugard 445 - antioxidant available from Uniroyal Chemical Company of Oxford, Connecticut.

### EXAMPLE 16

### Yellow Ink Made From Urethane Wax, Urethane Resin, Tackifier Resin and Polymeric Dye

In a stainless steel beaker were combined about 77.8 grams of the reaction product urethane material from Example 5, about 77.7 grams of a rosin ester tackifier resin available commercially as Arakawa KE-100¹, about 132.5 grams of the reaction product mono-urethane wax material from Example 10 (stearyl stearurethane) and about 0.5 grams of Uniroyal Naugard 445 antioxidant. The materials were melted together at a temperature of about 140°C in an oven, then blended by stirring in a temperature controlled mantle at about 115°C for about 1/2 hour. To this mixture was added about 11.6 grams of Milliken Chemical Y869 polymeric colorant. After stirring for about 1/2 hour, the yellow ink was filtered through a heated Mott apparatus (available from Mott Metallurgical) using #3 Whatman filter paper and a pressure of about 15 psi. The filtered phase change ink was poured into molds and allowed to solidify to form ink sticks. This final ink product was characterized by the following physical properties: viscosity of about 11.8 cPs as measured by a Ferranti-Shirley cone-plate viscometer at about 140°C, and a melting point of about 80°C as measured by differential scanning calorimetry using a DuPont 2100 calorimeter. The T_{g} of the final ink product was not measured. The spectral strength of the ink was determined using a spectrophotographic procedure based on the measurement of the colorant in solution by dissolving the solid ink in butanol and measuring the absorbance using a Perkin Elmer Lambda 2S UV/VIS spectrophotometer. The spectral strength of the ink was measured as about 726 milliliters · Absorbance Units per gram at λₘₐₓ.
¹KE-100 - Glycerol ester of hydrogenated abietic (rosin) acid available from Arakawa Chemical Industries, Ltd. of Osaka, Japan.

### EXAMPLE 17

### Black Ink Made From Urethane Wax, Urethane Resin and Urea Resin

In a stainless steel beaker were combined about 79.3 grams of the reaction product urethane material from Example 5, about 79.3 grams of the reaction product urea resin material from Example 8, about 135 grams of the reaction product mono-urethane wax material from Example 10 (stearyl stearurethane) and about 0.5 grams of Uniroyal Naugard 445 antioxidant¹. The materials were melted together at a temperature of about 140°C in an oven, then blended by stirring in a temperature controlled mantle at about 115°C for about 1/2 hour. To this mixture was added about 5.8 grams of Solvent Black 45. After stirring for about 1/2 hour, the black ink was filtered through a heated Mott apparatus (available from Mott Metallurgical) using #3 Whatman filter paper and a pressure of about 15 psi. The filtered phase change ink was poured into molds and allowed to solidify to form ink sticks. This final ink product was characterized by the following physical properties: viscosity of about 15.2 cPs as measured by a Ferranti-Shirley cone-plate viscometer at about 140°C, a melting point of about 81°C as measured by differential scanning calorimetry using a DuPont 2100 calorimeter, and a T^{g} of about 25°C as measured by Dynamic Mechanical Analysis using a Rheometrics Solids Analyzer (RSAII). The spectral strength of the ink was determined using a spectrophotographic procedure based on the measurement of the colorant in solution by dissolving the solid ink in butanol and measuring the absorbance using a Perkin Elmer Lambda 2S UV/VIS spectrophotometer. The spectral strength of the ink was measured as about 583 milliliters · Absorbance Units per gram at λₘₐₓ.
¹Naugard 445 - antioxidant available from Uniroyal Chemical Company of Oxford, Connecticut.

### EXAMPLE 18

### Cyan Ink Made From Amide Wax, Mixed Urethane/Urea Resin and Cyan Colored Urethane Resin

In a stainless steel beaker were combined about 250 grams of the cyan colored resin from Example 2 of co-pending European patent application No. (not yet allotted), Our File APEP97524, filed concurrently herewith and in the name of the applicant of the present invention, about 250 grams of the reaction product urethane/urea mixture material from Example 2, about 540 grams of Witco S-180 stearyl stearamide¹ and about 2.0 grams of Uniroyal Naugard 445 antioxidant². The materials were melted together at a temperature of 140°C in an oven, then blended by stirring in a temperature controlled mantle at about 115°C for about 1/2 hour. To this mixture was added about 5 grams of Solvent Blue 44. After stirring for about 1/2 hour, the cyan ink was filtered through a heated Mott apparatus (available from Mott Metallurgical) using #3 Whatman filter paper and a pressure of about 15 psi. The filtered phase change ink was poured into molds and allowed to solidify to form ink sticks. This final ink product was characterized by the following physical properties: viscosity of about 13.0 cPs as measured by a Ferranti-Shirley cone-plate viscometer at about 140°C, a melting point of about 89°C as measured by differential scanning calorimetry using a DuPont 2100 calorimeter, and a T_{g} of about 27.5°C as measured by Dynamic Mechanical Analysis using a Rheometrics Solids Analyzer (RSAII). The spectral strength of the ink was determined using a spectrophotographic procedure based on the measurement of the colorant in solution by dissolving the solid ink in butanol and measuring the absorbance using a Perkin Elmer Lambda 2S UV/VIS spectrophotometer. The spectral strength of the ink was measured as about 1069 milliliters · Absorbance Units per gram at λₘₐₓ.
¹Kemamide S-180 - Stearyl stearamide available from Witco Chemical Company of Memphis, Tennessee.
²Naugard 445 - antioxidant available from Uniroyal Chemical Company of Oxford, Connecticut.

### EXAMPLE 19

### Yellow Ink Made From Amide Wax, Mixed Urethane/Urea Resin and Yellow Colored Urethane Resin

In a stainless steel beaker were combined about 98.6 grams of the colored resin from Example 1 of co-pending European patent application No. (not yet allotted), Our File APEP97524, filed concurrently herewith and in the name of the applicant of the present invention, about 80.7 grams of the material from Example 2, about 179 grams of Witco S-180 stearyl stearamide¹ and about 0.7 grams of Uniroyal Naugard 445 antioxidant². The materials were melted together at a temperature of about 140°C in an oven, then blended by stirring in a temperature controlled mantle at about 115°C for about 1/2 hour. The yellow ink was then filtered through a heated Mott apparatus (available from Mott Metallurgical) using #3 Whatman filter paper and a pressure of about 15 psi. The filtered phase change ink was poured into molds and allowed to solidify to form ink sticks. This final ink product was characterized by the following physical properties: viscosity of about 13.6 cPs as measured by a Ferranti-Shirley cone-plate viscometer at about 140°C, a melting point of about 90°C as measured by differential scanning calorimetry using a DuPont 2100 calorimeter, and a T_{g} of about 20°C as measured by Dynamic Mechanical Analysis using a Rheometrics Solids Analyzer (RSAII). The spectral strength of the ink was determined using a spectrophotographic procedure based on the measurement of the colorant in solution by dissolving the solid ink in butanol and measuring the absorbance using a Perkin Elmer Lambda 2S UV/VIS spectrophotometer. The spectral strength of the ink was measured as about 1497 milliliters · Absorbance Units per gram at λₘₐₓ.
¹Kemamide S-180 - Stearyl stearamide available from Witco Chemical Company of Memphis, Tennessee.
²Naugard 445 - antioxidant available from Uniroyal Chemical Company of Oxford, Connecticut.

### EXAMPLE 20

### Black Ink Made From Amide Wax, Mixed Urethane/Urea Resin and Black Colored Urethane Resin

In a stainless steel beaker were combined about 301 grams of the colored resin from Example 3 of co-pending European patent application No. (not yet allotted), Our File APEP97524, filed concurrently herewith and in the name of the applicant of the present invention, about 374 grams of the reaction product urethane/urea mixture material from Example 2, about 802 grams of Witco S-180 stearyl stearamide¹ and about 3.0 grams of Uniroyal Naugard 445 antioxidant². The materials were melted together at a temperature of about 140°C in an oven, then blended by stirring in a temperature controlled mantle at about 115°C for about 1/2 hour. The black ink was then filtered through a heated Mott apparatus (available from Mott Metallurgical) using #3 Whatman filter paper and a pressure of about 15 psi. The filtered phase change ink was poured into molds and allowed to solidify to form ink sticks. This final ink product was characterized by the following physical properties: viscosity of about 13.3 cPs as measured by a Ferranti-Shirley cone-plate viscometer at about 140°C, a melting point of about 89°C as measured by differential scanning calorimetry using a DuPont 2100 calorimeter, and a T_{g} of about 16°C as measured by Dynamic Mechanical Analysis using a Rheometrics Solids Analyzer (RSAII). The spectral strength of the ink was determined using a spectrophotographic procedure based on the measurement of the colorant in solution by dissolving the solid ink in butanol and measuring the absorbance using a Perkin Elmer Lambda 2S UV/VIS spectrophotometer. The spectral strength of the ink was measured as about 869 milliliters · Absorbance Units per gram at λₘₐₓ.
¹Kemamide S-180 - Stearyl stearamide available from Witco Chemical Company of Memphis, Tennessee.
²Naugard 445 - antioxidant available from Uniroyal Chemical Company of Oxford, Connecticut.

### EXAMPLE 21

### Yield Stress versus Temperature Curve for the Ink From Example 20 Compared to a Prior Art Phase Change Ink

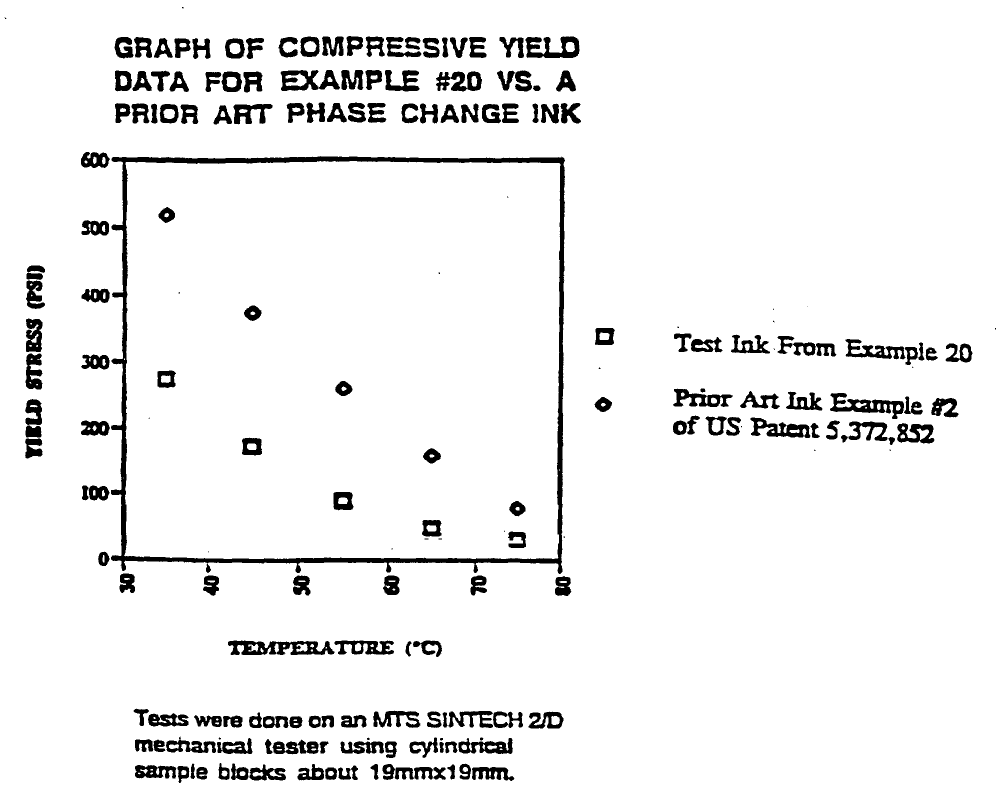

These results show that the test ink from Example 20 requires less pressure to fuse the test ink at elevated temperatures than the prior art ink and is therefore better adapted for offset printing applications, although it is also suitable for direct printing.

### PRINT TESTING

The inks in examples 11-20 were tested in a Tektronix Phaser® 340 printer, which uses an offset transfer printing system. All of the above inks were found to completely transfer and to give images of good color, print quality and durability either as primary colors or when used in combination with each other or the commercially available Phaser® 340 printer inks.

The inks in Examples 18-20 were tested in a Tektronix Phase® 300 printer, which uses a direct printing system. All of the above inks were found to give images of good color, print quality and durability either as primary colors or when used in combination with each other or the commercially available Phaser® 300 printer inks.

### PHYSICAL PROPERTIES OF SELECTED WAXES, RESINS, AND INKS

Tables 1 and 2 are used to illustrate the differences in physical properties that can be achieved by the proper selection of functionality in analogous test molecules.

**TABLE 1**

| Analogous Waxes | | |
|---|---|---|
| | MELTING POINT | VISCOSITY @ 140°C |
| Stearyl Stearurethane (EXAMPLE 10) | 84°C | 3.7 cPs |
| Stearyl Stearamide (Witco S-180) | 92°C | 5.9 cPs |
| Stearyl Stearurea (EXAMPLE 9) | 113 °C | 13.2 cPs |

**TABLE 2**

| Analogous Stearyl/IPDI Products | | |
|---|---|---|
| | MELTING POINT | VISCOSITY @ 140°C |
| Stearyl/IPDI Urethane (EXAMPLE 7) | 48°C | 11 cPs |
| Mixed Stearyl/IPDI Urea/Urethane (EXAMPLE 6) | 82°C | 40 cPs |
| Stearyl/IPDI Urea (EXAMPLE 8) | 107 °C | 988 cPs |

Table 3 illustrates the difference in physical properties of resins that can be obtained by mixing both functionality and molecular shape and size.

**TABLE 3**

| Mixtures of Abietic Alcohol and Stearyl Amine, Reacted with IPDI | |
|---|---|
| Alcohol/Amine Ratio | T_{g}'s /Melting Point /Viscosity |
| 100% Alcohol (EXAMPLE 1) | 48°C / 72-76°C / 4079 cPs @140°C |
| 75% Alcohol/25% Amine (EXAMPLE 2) | 23°C / 68-87°C / 315 cPs @140°C |
| 62.5% Alcohol/37.5% Amine (EXAMPLE 3) | 17°C / 68-89°C / 275 cPs @140°C |
| 50% Alcohol/50% Amine (EXAMPLE 4) | 16°C / 73-110°C / 15.7 cPs @140°C |

The phase change ink composition of the present invention can have a percentage composition of 0% to 75% by weight colored resin, 0 % to 75% by weight colorless resin, and 25% to 75% by weight wax. A more preferred range is 0% to 50% by weight colored resin, 0% to 50% by weight colorless resin, and 25% to 75% by weight wax. A most preferred range is 0% to 40% by weight colored resin, 0 % to 40% by weight colorless resin, and 40% to 60% by weight wax.

While the invention has been described above with reference to specific embodiments thereof, it is apparent that many changes, modifications and variations can be made without departing from the inventive concept disclosed herein. For example, it should be noted where a urethane reaction product is obtained, a single alcohol precursor or multiple alcohol precursors may be used with an appropriate isocyanate as long as the required stoichiometric ratio is maintained. Similarly, where a urea is the reaction product, a single amine precursor or multiple amine precursors may employed as long as the required stoichiometric ratio is maintained. Accordingly, it is intended to embrace all such changes, modifications and variations that fall within the scope of the appended claims.

Examples 1 to 3 of the co-pending application referred to in Examples 18 to 20 above are set out below for convnience.

### SUPPLEMENTARY EXAMPLE 1

### The Reaction Product of Octylphenol Ethoxylate, Isophorone Diisocyanate and Yellow Reactive Colorant

About 525.0 grams (4.73 equiv.) of isophorone diisocyanate¹ and 1.5 grams of dibutyltindilaurate² catalyst, followed by about 986 grams (3.88 equiv.) of octylphenol ethoxylate³, were added to a 3000 ml three-neck resin kettle equipped with a Trubore stirrer, N₂ atmosphere inlet, and a thermocouple-temperature controller. The reaction mixture was heated to about 135°C with stirring under nitrogen. After 2.0 hours at about 135°C, about 346.1 grams (0.497 equiv.) of a yellow polymeric colorant corresponding to Colorant A from Table I of U.S. Patent No. 5,231,135 were added and the reaction mixture was heated for approximately 2 hours. An additional about 110.0 grams (0.433 equiv.) of octylphenol ethoxylate³ were added and the reaction mixture was heated at about 150°C for approximately 2 hours. An FT-IR of the product was obtained to insure all of the isocyanate (NCO) functionality was consumed. The absence (disappearance) of a peak at about 2285 cm⁻¹ (NCO) and the appearance (or increase in magnitude) of peaks at about 1740-1680 cm⁻¹ and about 1540-1530 cm⁻¹ corresponding to urethane frequencies were used to confirm this. The diurethane reaction product was poured into aluminum molds and allowed to cool and harden. This final colored resin product was characterized by the following physical properties: viscosity of about 121 cPs as measured by a Ferranti-Shirley cone-plate viscometer at about 140°C, a melting point of about 38°C to about 115 °C as measured by electrothermal capillary melting point apparatus, a T_{g} of about 12.4 °C as measured by differential scanning calorimetry using a DuPont 2100 calorimeter at a scan rate of 20°C/minute, and a spectral strength of about 5634 milliliters · Absorbance Units per gram at λₘₐₓ as measured by dilution in n-butanol using a Perkin Elmer Lambda 25 UV/VIS spectrophotometer.
¹Desmodur I - Isophorone diisocyanate available from Bayer Corp. of Pittsburg, Pennsylvania.
²Dibutyltindilaurate available from Aldrich Chemicals of Milwaukee, Wisconsin.
³IGEPAL CA-210 octylphenol ethoxylate is available from Rhone-Poulenc Co., Cranbury, NJ.

### SUPPLEMENTARY EXAMPLE 2

### The Reaction Product of Octylphenol Ethoxylate, Isophorone Diisocyanate and Cyan Reactive Colorant

About 525.0 grams (4.73 equiv.) of isophorone diisocyanate¹, about 1.5 grams of dibutyltindilaurate² catalyst, and about 992.0 grams (3.91 equiv.) of octylphenol ethoxylate³ were added to a 3000 ml three-neck resin kettle equipped with a Trubore stirrer, a N₂ atmosphere inlet, and a thermocouple-temperature controller. The reaction mixture was heated to about 135°C and held for approximately 3.5 hours with stirring under nitrogen. About 240.6 grams (0.473 equiv.) of a cyan polymeric colorant⁴ then were added and the mixture was heated to about 135°C for 2 hours. An additional about 110.0 grams (0.433 equiv.) of octylphenol ethoxylate³ were added and the reaction mixture was heated at about 150°C for approximately 2 hours. An FT-IR of the product was obtained to insure all of the isocyanate (NCO) functionality was consumed. The absence (disappearance) of a peak at about 2285 cm⁻¹ (NCO) and the appearance (or increase in magnitude) of peaks at about 1740-1680 cm⁻¹ and about 1540-1530 cm⁻¹ corresponding to urethane frequencies were used to confirm this. The diurethane reaction product was poured into aluminum molds and allowed to cool and harden. This final colored resin product was characterized by the following physical properties: viscosity of about 181.8 cPs as measured by a Ferranti-Shirley cone-plate viscometer at about 140°C, a melting point of about 59.9-70.2°C as measured by electrothermal capillary melting point apparatus, and a T_{g} of about 23.1°C as measured by differential scanning calorimetry using a DuPont 2100 calorimeter at a scan rate of 20°C/minute, and a spectral strength of about 5588 milliliters · Absorbance Units per gram at λₘₐₓ as measured by dilution in n-butanol using a Perkin Elmer Lambda 25 UV/VIS spectrophotometer.
¹Desmodur I - Isophorone diisocyanate available from Bayer Corp. of Pittsburg, Pennsylvania.
²Dibutyltindilaurate available from Aldrich Chemicals of Milwaukee, Wisconsin.
³IGEPAL CA-210 octylphenol ethoxylate is available from Rhone-Poulenc Co., Cranbury, NJ.
⁴Experimental Blue III 9495-28 available from Milliken and Company of Spartanburg, South Carolina.

### SUPPLEMENTARY EXAMPLE 3

### The Reaction Product of Octylphenol Ethoxylate, Isophorone Diisocyanate and Blended Black Reactive Colorants

About 150.0 grams (0.295 equiv.) of a cyan polymeric reactive colorant¹, about 225.0 grams (0.147 equiv.) of a violet polymeric colorant corresponding to Colorant U from Table I of U.S. Patent No. 5,231,135; about 345.0 grams (0.552 equiv.) of an orange polymeric reactive colorant corresponding to Colorant B from Table I of U.S. Patent No. 5,231,135; about 450.0 grams (4.054 equiv.) of isophorone diisocyanate² and about 0.18 grams of dibutyltindilaurate catalyst³ were added to a 3000 ml three-neck resin kettle equipped with a Trubore stirrer, a N₂ atmosphere inlet, and a thermocouple-temperature controller. The reaction mixture was heated to about 90°C with stirring under nitrogen. After 3.5 hours at about 90°C, about 1.0 gram of additional dibutyltindilaurate catalyst^{³} and about 805.0 grams (3.012 equiv.) of octylphenol ethoxylate⁴ were added and the temperature was raised to about 130°C and held for approximately 3.5 hours. An FT-IR of the product was obtained to insure all of the isocyanate (NCO) functionality was consumed. The absence (disappearance) of a peak at about 2285 cm⁻¹ (NCO) and the appearance (or increase in magnitude) of peaks at about 1740-1680 cm⁻¹ and about 1540-1530 cm⁻¹ corresponding to urethane frequencies were used to confirm this. The diurethane reaction product was poured into aluminum molds and allowed to cool and harden. This final colored resin product was characterized by the following physical properties: viscosity of about 163.0 cPs as measured by a Ferranti-Shirley cone-plate viscometer at about 140°C, a melting point of below ambient temperature and not measurable by electrothermal melting point apparatus, a T_{g} of about 3.8°C as measured by differential scanning calorimetry using a DuPont 2100 calorimeter at a scan rate of 20°C/minute, and a spectral strength of about 4667 milliliters · Absorbance Units per gram at λₘₐₓ as measured by dilution in n-butanol using a Perkin Elmer Lambda 25 UV/VIS spectrophotometer.
¹Experimental Blue III 9495-28 available from Milliken and Company of Spartanburg, South Carolina.
²Desmodur I - Isophorone diisocyanate available from Bayer Corp. of Pittsburg, Pennsylvania.
³Dibutyltindilaurate available from Aldrich Chemicals of Milwaukee, Wisconsin.
⁴Triton X15 octylphenol ethoxylate is available from Union Carbide Chemicals and Plastics Company Inc., of Danbury, Connecticut.

## Claims

1. A phase change ink carrier composition comprising in combination:
(a) a urethane isocyanate-derived resin derived from an isocyanate and at least one monohydric alcohol selected from octylphenol ethoxylate and hydroabietyl alcohol.
(b) a urea isocyanate-derived resin, and
(c) a mono-amide wax.

2. The phase change ink carrier composition of claim 1, wherein the isocyanate is a monoisocyanate, a diisocyanate, a triisocyanate, a copolymer of a diisocyanate, or a copolymer of a triisocyanate.

3. The phase change ink carrier composition of claim 1 or 2, wherein the isocyanate is isophorone diisocyanate.

4. The phase change ink carrier composition of any of claims 1 to 3, wherein the urea isocyanate-derived resin is the reaction product of an isocyanate and at least one amine.

5. The phase change ink carrier composition of claim 4, wherein the amine is a monoamine selected from the group consisting of an aliphatic amine, an aromatic amine, an aliphatic/aromatic amine, a fused ring system amine, a multifunctional amine, a hydroxyl/amino containing compound, and an amide.

6. The phase change ink carrier composition of claim 4 or 5, wherein the amine is octadecyl amine.

7. The phase change ink carrier composition of any of claims 4 to 6, wherein the urea isocyanate-derived resin is the product of a reaction which comprises mixing and heating the isocyanate and the amine under an inert atmosphere.

8. A phase change ink composition comprising the phase change ink carrier composition of any of claims 1 to 7 and a phase change compatible colorant.

9. The phase change ink composition of claim 8, wherein the phase change compatible colorant is a dye, a colored resin, or a pigment.

10. The phase change ink composition of claim 8 or 9, wherein the composition further contains an anti-oxidant.

11. Use of a phase change ink composition of any of claims 8 to 10 in a direct printing application or in an indirect printing application.

## Patentansprüche

1. Phasen austausch-Tinten träger-Zusammensetzung, umfassend in Kombination:
(a) ein aus einem Isocyanat abgeleitetes Urethan-Harz, abgeleitet von einem Isocyanat und wenigstens einem einwertigen Alkohol, der gewählt ist aus der Gruppe, die besteht aus Octylphenolethoxylat und Hydroabietylalkohol;
(b) ein aus einem Isocyanat abgeleitetes Harnstoff-Harz; und
(c) ein Monoamid-Wachs.

2. Phasenaustausch-Tintenträger-Zusammensetzung nach Anspruch 1, worin das Isocyanat ein Monoisocyanat, ein Diisocyanat, ein Triisocyanat, ein Copolymer eines Diisocyanats oder ein Copolymer eines Triisocyanats ist.

3. Phasenaustausch-Tintenträger-Zusammensetzung nach Anspruch 1 oder 2, worin das Isocyanat Isophorondiisocyanat ist.

4. Phasenaustausch-Tintenträger-Zusammensetzung nach einem der Ansprüche 1 bis 3, worin das aus einem Isocyanat abgeleitete Harnstoff-Harz das Reaktionsprodukt eines Isocyanats und wenigstens eines Amins ist.

5. Phasenaustausch-Tintenträger-Zusammensetzung nach Anspruch 4, worin das Amin ein Monoamin ist, das gewählt ist aus der Gruppe, die besteht aus einem aliphatischen Amin, einem aromatischen Amin, einem aliphatisch/aromatischen Amin, einem Amin mit einem kondensierten Ringsystem, einem multifunktionellen Amin, einer Hydroxy-Gruppe(n)/Amino-Gruppe(n) enthaltenden Verbindung und einem Amid.

6. Phasenaustausch-Tintenträger-Zusammensetzung nach Anspruch 4 oder 5, worin das Amin Octadecylamin ist.

7. Phasenaustausch-Tintenträger-Zusammensetzung nach einem der Ansprüche 4 bis 6, worin das aus einem Isocyanat abgeleitete Harnstoff-Harz das Produkt einer Reaktion ist, die das Mischen und Erhitzen des Isocyanats und des Amins in einer inerten Atmosphäre umfaßt.

8. Phasenaustausch-Tinten-Zusammensetzung, umfassend die Phasenaustausch-Tintenträger-Zusammensetzung nach einem der Ansprüche 1 bis 7 und ein für den Phasenaustausch verträgliches Färbemittel.

9. Phasenaustausch-Tinten-Zusammensetzung nach Anspruch 8, worin das für den Phasenaustausch verträgliche Färbemittel ein Farbstoff, ein gefärbtes Harz oder ein Pigment ist.

10. Phasenaustausch-Tinten-Zusammensetzung nach Anspruch 8 oder Anspruch 9, worin die Zusammensetzung weiter einen Oxidationsinhibitor enthält.

11. Verwendung einer Phasenaustausch-Tinten-Zusammensetzung nach einem der Ansprüche 8 bis 10 in einer Direkt-Druck-Anwendung oder in einer Indirekt-Druck-Anwendung.

## Revendications

1. Composition de support d'encre à changement de phase comprenant en combinaison :
(a) une résine d'uréthane provenant d'un isocyanate obtenue à partir d'un isocyanate et d'au moins un monoalcool choisi parmi l'éthoxylate d'octylphénol et l'alcool hydro-abiétylique,
(b) une résine d'urée provenant d'un isocyanate, et
(c) une cire de mono-amide.

2. Composition de support d'encre à changement de phase selon la revendication 1, dans laquelle l'isocyanate est un mono-isocyanate, un diisocyanate, un triisocyanate, un copolymère d'un diisocyanate ou un copolymère d'un triisocyanate.

3. Composition de support d'encre à changement de phase selon la revendication 1 ou 2, dans laquelle l'isocyanate est le diisocyanate d'isophorone.

4. Composition de support d'encre à changement de phase selon l'une quelconque des revendications 1 à 3, dans laquelle la résine d'urée provenant d'un isocyanate est le produit de la réaction d'un isocyanate et d'au moins une amine.

5. Composition de support d'encre à changement de phase selon la revendication 4, dans laquelle l'amine est une monoamine choisie parmi le groupe constitué d'une amine aliphatique, d'une amine aromatique, d'une amine aliphatique/aromatique, d'une amine d'un système à cycles condensés, d'une amine multifonctionnelle, d'un composé contenant un hydroxy/amino, et d'un amide.

6. Composition de support d'encre à changement de phase selon la revendication 4 ou 5, dans laquelle l'amine est l'octadécylamine.

7. Composition de support d'encre à changement de phase selon l'une quelconque des revendications 4 à 6, dans laquelle la résine d'urée provenant d'un isocyanate est le produit d'une réaction qui comprend le mélange et le chauffage de l'isocyanate et de l'amine sous une atmosphère inerte.

8. Composition d'encre à changement de phase comprenant la composition de support d'encre à changement de phase selon les revendications 1 à 7 et un colorant compatible avec le changement de phase.

9. Composition d'encre à changement de phase selon la revendication 8, dans laquelle le colorant compatible avec le changement de phase est une teinture, une résine colorée ou un pigment.

10. Composition d'encre à changement de phase selon la revendication 8 ou 9, dans laquelle la composition contient en outre un antioxydant.

11. Utilisation d'une composition d'encre à changement de phase selon l'une quelconque des revendications 8 à 10 dans une application d'impression directe ou dans une application d'impression indirecte.
